(19) Europäisches Patentamt
European Patent Office
Office européen des brevets

(11) Veröffentlichungsnummer : **0 135 054**
**B1**

(12) # EUROPÄISCHE PATENTSCHRIFT

(45) Veröffentlichungstag der Patentschrift : **06.05.87**

(51) Int. Cl.⁴ : **C 09 B 67/08**, C 09 B 57/04

(21) Anmeldenummer : **84108679.6**

(22) Anmeldetag : **23.07.84**

(54) **Zubereitungen von leicht verteilbaren Isoindolinpigmenten und deren Verwendung.**

(30) Priorität : **30.07.83 DE 3327562**

(43) Veröffentlichungstag der Anmeldung : **27.03.85 Patentblatt 85/13**

(45) Bekanntmachung des Hinweises auf die Patenterteilung : **06.05.87 Patentblatt 87/19**

(84) Benannte Vertragsstaaten : **CH DE FR GB IT LI**

(56) Entgegenhaltungen :
**EP-A- 0 017 214**
**BE-A- 662 638**
**FR-A- 2 412 589**
**FR-A- 2 414 066**
**US-A- 2 365 479**
**US-A- 2 772 983**
**CHEMICAL ABSTRACTS, Band 93, Nr. 12, September 1980, Seite 78, Nr. 116068c, Columbus, Ohio, USA**

(73) Patentinhaber : **BASF Aktiengesellschaft**
**Carl-Bosch-Strasse 38**
**D-6700 Ludwigshafen (DE)**

(72) Erfinder : **Henning, Georg, Dr.**
**Thorwaldsenstrasse 3**
**D-6700 Ludwigshafen (DE)**
Erfinder : **Lotsch, Wolfgang, Dr.**
**Stettiner Strasse 32**
**D-6711 Beindersheim (DE)**
Erfinder : **Guenthert, Paul, Dr.**
**Johannes-Brahms-Strasse 2**
**D-6707 Schifferstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 135 054 B1

**Beschreibung**

Auf dem Gebiet der Offsetdruckfarben werden heute weitgehend genormte Farbtöne mit Pigmenten vom Typ C.I. Pigment Yellow 12 und 13 eingestellt. Diese Pigmente sind seit langem bekannt und sind durch jahrelange Bearbeitung durch die Hersteller auf ein hohes Qualitätsniveau in Bezug auf leichte Verteilbarkeit im Offsetdruckfarbenfirnis gebracht worden. Hierdurch ist eine Herstellung von Druckfarben in Dissolvern, Kugelmühlen und Walzwerken mit relativ geringem Energieaufwand, in kurzer Zeit und mit hervorragender Feinverteilung der Pigmentteilchen im Bindemittel möglich. Ein großer Nachteil der Pigmente vom Typ Pigment Yellow 12 und 13 ist jedoch ihre geringe Lichtechtheit, die bei intensiver Lichteinwirkung zum Ausbleichen und/oder zu Farbverschiebungen der Drucke führt.

In der BE-A 662 638 wird ein Verfahren zur Herstellung von Pigmentpräparationen beschrieben, bei dem man Dihydrobietinsäure oder Tetrahydroabietinsäure und/oder deren Partialester in Form einer wäßrigen Lösung mit wasserlöslichen Salzen von Metallen der II. oder III. Gruppe des periodischen Systems reagieren läßt. Dabei werden die Pigmente von den unlöslichen Harzsäure-Metallsalzen umhüllt. Als Pigmente kommen für dieses Verfahren u. a. auch solche der Azomethinreihe, z. B. Derivate des Tetrachlorisoindolinons in Betracht.

Im Prinzip wird das Verfahren der BE-A 662 638 in der US-A 2 772 983 bei Azopigmenten auf der Basis 4,4'-Diaminodiphenyl beschrieben. Im Unterschied zur BE-A wird beim Verfahren der US-A vor der Fällung der Harzsäuren Sulfobernsteinsäure-di-$C_1$- bis $C_8$-alkylester in Form der Natriumsalze als Dispergier- oder Benetzungsmittel zugegeben.

Die aus der BE-A und US-A bekannten Verfahren zur Herstellung von Pigmentpräparationen sind auf Isoindolinpigmente wegen deren Alkaliempfindlichkeit nicht anwendbar.

Pigmente der Formel I haben gegenüber Pigment Yellow C.I. 12 und 13 eine bedeutend höhere Lichtechtheit, so daß es wünschenswert erschien, auch diese Pigmente zur Herstellung von Offsetdruckfarben zu verwenden. Bedauerlicherweise sind aber die bisher bekannten Pigmentformen der Verbindungen der Formel I in Offsetfirnissen und einigen Thermoplasten nur sehr schwer und nur unvollständig verteilbar. Aufgabe der vorliegenden Erfindung war es, Isoindolinpigmente zu entwickeln, die in Offsetdruckfirnissen und wenn möglich auch in Thermoplasten leicht dispergierbar sind.

Es wurde nun gefunden, daß Zubereitungen von leicht verteilbaren Isoindolinpigmenten vorliegen, wenn diese

a) mindestens ein Isoindolinpigment der Formel I

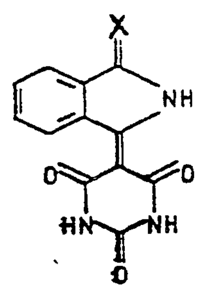

(I)

in der X für

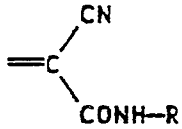

oder

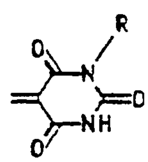

steht
und R Wasserstoff oder $C_1$- bis $C_4$-Alkyl bedeuten, und

b) mindestens 5 Gew.%, bezogen auf (a), mindestens eines Carboxylgruppen tragenden Harzes aus der Reihe der (1) natürlichen oder modifizierten natürlichen (halbsynthetischen) Harze, (2) synthetischen Harze, deren Salze mit starken Basen in Wasser löslich sind, (3) eines Calcium-, Magnesium-, Strontium- oder Zinksalzes der unter (1) und/oder (2) genannten Harze oder Gemische aus (1), (2) und/oder (3), enthalten, wobei die Zubereitungen durch Suspendieren oder gegebenenfalls Dispergieren des Pigments bzw. des Pigmentgemisches in wäßrigem Medium und anschließender Harzung (Belegung) bei pH $< 9{,}5$, vorzugsweise $< 8$ erhältlich sind.

Die Pigmente in den neuen Zubereitungen lassen sich im Gegensatz zu den reinen Pigmenten der Formel I sehr leicht in Offsetdruckfirnissen einarbeiten und ergeben dank der hervorragenden Feinverteilung des Pigments stippenfreie, farbstarke Druckfarben mit sehr guten Applikationseigenschaften. Die Zubereitungen sind den Normgelbpigmenten des Standes der Technik vom Typ C.I. Pigment Yellow 12 und 13 in vielen Eigenschaften mindestens gleichwertig, in der Lichtechtheit jedoch weit überlegen.

Die Pigmentzubereitungen gemäß der Erfindung haben außerdem noch den Vorteil, daß diese, bezogen auf den Gehalt an Pigment, eine deutlich höhere Farbstärke aufweisen als die zugrundeliegenden Pigmente der Formel I.

Die in den neuen Zubereitungen als (a) enthaltenen Pigmente der Formel I sind bekannt oder sind nach an sich bekanten Verfahren herstellbar. Das Pigment (I) mit

$$X = NC-\underset{\parallel}{C}-CONH-CH_3$$

ist z. B. aus der EP-A 17 214, Beispiel 1 bekannt. Das Pigment (I), in dem X der Barbitursäurerest ist, ist z. B. in der DE-AS 2 628 409, Beispiel 1 beschrieben.

Als Komponenten (b) kommen für die Zubereitungen z. B. in Betracht :

b1) natürliche und modifizierte natürliche (halbsynthetische) Carboxylgruppen tragende Harze,

b2) synthetische Carboxylgruppen tragende Harze, wobei die Salze von starken Basen der unter b1) und b2) genannten Harze im Wasser löslich sind,

b3) die Calcium-, Magnesium-, Strontium- und Zinksalze der unter (1) und/oder (2) genannten Harze sowie Gemische dieser Harze und/oder Salze.

Als natürliche und modifizierte Carboxylgruppen tragende Harze (b1) sind z. B. im einzelnen zu nennen :

Collophonium, dimerisiertes Collophonium, polymerisiertes Collophonium, disproportioniertes Collophonium, Abietinsäure und deren Hydrierungsprodukte, modifiziertes Collophonium, modifizierte Abietinsäure, z. B. durch Umsetzen mit Phenolen, Maleinsäureanhydrid, Fumarsäure, Acrylsäure, Acrylnitril, Acrylsäureester, Butadien, Isopren, Cyclopentadien, Cumaron und/oder Inden.

Die synthetischen Carboxylgruppen tragenden Harze (b2) sind Copolymere auf der Basis von α) mindestens eines eine oder zwei Carboxylgruppen tragenden Monomeren mit β) mindestens einem weiteren, mit dem Monomeren (α) copolymerisierbaren Monomeren. Die Copolymere müssen einerseits mit Basen wie Natron- oder Kalilauge wäßrige (echte oder colloidale) Lösungen geben und andererseits entweder im pH-Bereich $< 9{,}5$ als freie Säuren ausfallen oder durch Calcium-, Magnesium-, Strontium- und/oder Zinkionen in Form von schwerlöslichen Salzen gefällt werden.

Als Comonomere (α) sind z. B. Maleinsäureanhydrid, Maleinsäure, Fumarsäure, sowie deren Halbamide und deren $C_1$- bis $C_4$-Alkylhalbester, Acrylsäure, Methacrylsäure, Crotonsäure, und Gemische dieser Monomeren zu nennen.

Als weitere, mit (α) copolymerisierbare Monomere kommen z. B. in Betracht : Vinyl-$C_1$- bis $C_4$-alkylether wie Vinylmethylether, Vinylethylether, Vinylisobutylether, Vinylester von $C_2$- bis $C_4$-Alkansäuren wie Vinylacetat, Vinylpropionat, (Meth)Acrylsäure-$C_1$- bis -$C_5$-alkylester wie Methyl-, Ethyl- und Butyl(meth)-acrylat, (Meth)Acrylamid, Acrylnitril, Styrol, Vinylchlorid, Vinylidenchlorid, Vinylpyrrolidon, Vinylimidazol, Vinylcaprolactam oder Gemische dieser Monomeren.

Die Carboxylgruppen tragenden Copolymere, die als Harze geeignet sind, und die Herstellung dieser Harze sind bekannt.

Als synthetische Harze (b2) sind im einzelnen z. B. zu nennen :

Copolymere auf der Basis Maleinsäureanhydrid/Methylvinylether ; Maleinsäureanhydrid oder deren $C_1$- bis $C_4$-Alkylhalbester/Styrol, (Meth)Acrylsäure/(Meth)Acrylsäureester, (Meth)Acrylsäure/(Meth)Acrylsäureester/Styrol und/oder Acrylnitril,

b3) Für (b) kommen außerdem die Calcium-, Magnesium-, Strontium- und Zinksalze der unter b1) und b2) genannten Harze in Betracht.

Als (b) können sowohl Gemische verschiedener Harze (b1) und/oder (b2) als auch Gemische verschiedener der unter (b3) genannten Salze als auch Gemische aus (b1), (b2) und (b3) verwendet werden.

Aus anwendungstechnischen Gründen sind für (b3) Calciumsalze bevorzugt.

Als Komponenten (b) sind (b1.1) Abietinsäure, Collophonium, dimerisiertes Collophonium, polymerisiertes Collophonium, disproportioniertes Collophonium, deren Hydrierungsprodukte und modifiziertes Collophonium, modifizierte Abietinsäure, und (b3.1) die Calciumsalze der unter (b1.1) genannten Harzsäuren besonders bevorzugt.

Zur Herstellung der neuen Zubereitungen verwendet man vorzugsweise die Pigmente (I) in Form der wäßrigen Filterkuchen, wie diese bei der Synthese oder nach dem Überführen in besondere Pigmentformen beim Isolieren erhalten werden.

Das Filtergut wird in Wasser suspendiert und je nach dem vorgesehenen Verwendungszweck — bezogen auf (a) — mit 5 bis 60 Gew.%, vorzugsweise 20 bis 40 Gew.%, (b) belegt.

Es ist jedoch nicht unbedingt erforderlich, das Pigment (I) zu isolieren. Es ist auch möglich, das Pigment (I) direkt in der bei der Synthese oder bei der Überführung in die Pigmentform erhaltenen

wäßrigen Suspension mit (b) zu belegen.

Die für die Belegung erforderlichen wäßrigen Lösungen der Harze erhält man durch Versetzen der wäßrigen Harzsuspension mit starken Basen wie Natron- oder Kalilauge. Da solche Lösungen stark alkalisch reagieren, wird beim Zugeben dieser Harzlösungen zu der Suspension der Isolindolinpigmente (I) je nach der Menge und dem pH-Wert der Harzlösung das Pigment mehr oder weniger angelöst, wobei eine deutliche Verschiebung des Farbtons eintritt. Letztere kann durch ein nachträgliches Stellen auf pH-Wert ≤ 7 zwar teilweise rückgängig gemacht werden, jedoch treten deutliche Ausbeuteverluste auf.

Bei der Belegung von (I) muß deshalb durch gleichzeitiges Zugeben von Säure dafür gesorgt werden, daß in der Pigmentsuspension ein pH-Wert von 9,5 nicht überschritten wird. Durch Herunterstellen des pH-Wertes unter den Neutralpunkt fällt dann das Harz im wesentlichen in Form der freien Säure aus.

In Offsetdruckfarbenfirnissen hervorragend verteilbare Zubereitungen liegen vor, wenn diese als (b) Calciumsalze der Harzsäuren, insbesondere des Collophoniums und der Abietinsäure und deren Abwandlungen enthalten. Solche Zubereitungen von (I) erhält man, wenn man die Pigmentsuspension zuerst mit einem löslichen Calciumsalz versetzt und dann erst die Harzung durchführt. Hierbei ist entscheidend, daß man durch gleichzeitiges Zugeben von Säure und der alkalischen Harzlösung zu der neutralen Pigmentsuspension dafür sorgt, daß aus den oben angegebenen Gründen der pH-Wert in der Suspension nicht über 9,5 steigt und zum anderen — wegen der Bildung der Harzsäuren — nicht deutlich unter pH 4 sinkt.

Die Temperaturen bei der Belegung können zwischen 0 und 90 °C liegen. Vorteilhafterweise erfolgt die Belegung bei Temperaturen zwischen Raumtemperatur (20 °C) und 75 °C.

Für die Verwendung von Zubereitungen von (I) für Offsetdruckfarben im Farbton Normgelb, hat es sich als vorteilhaft erwiesen, Mischungen von Pigmenten der Formeln II und III

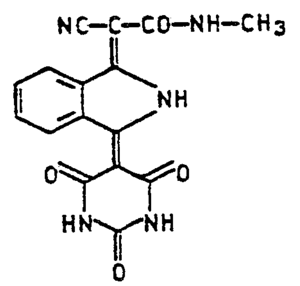

(II)

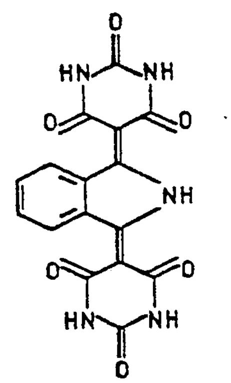

(III)

im ungefähren Verhältnis 4,5 : 1 bis 5,5 : 1, vorzugsweise 5 : 1 zu verwenden. Solche Mischungen zeigen gute Übereinstimmung mit dem Normgelbton. Dieses Ergebnis erhält man sowohl mit einer mechanischen Mischung der geharzten Einzelpigmente, als auch mit einem Pigmentgemisch aus (II) und (III), das durch gemeinsame Harzung des Gemisches der Preßkuchen erhalten wird. Da das Mischungsverhältnis von (II) zu (III) keinen grundlegenden Einfluß auf die leichte Verteilbarkeit hat, können durch Wahl geeigneter Mischungsverhältnisse auch andere zwischen den Farbtönen von (II) und (III) liegende Farbtöne eingestellt werden.

Die vorliegende Erfindung soll durch die folgenden Beispiele zusätzlich erläutert werden. Die Teile und Prozentangaben beziehen sich auf das Gewicht.

Beispiel 1

200 Teile des Pigments der Formel II (hergestellt nach EP-A 17 214, Beispiel 1) und 40 Teile des Pigments der Formel III (hergestellt nach DE-B 26 28 40, Beispiel 1), beide in der Form der bei der Synthese erhaltenen wäßrigen Preßkuchen, werden 1 600 Teilen Wasser zwei Stunden dispergiert. Nach dem Zugeben von 36 Teilen Calciumchlorid wird auf 40 °C erwärmt und bei dieser Temperatur langsam 750 Teile einer 10 %igen Natriumharzseifenlösung zugetropft, wobei durch Zutropfen von etwas Salzsäure (30 %ig) der pH-Wert in der Suspension zwischen 5 und 7 gehalten wird. Man rührt 1 Stunde nach, filtriert und wäscht mit Wasser, trocknet bei 80 °C. Nach dem Mahlen erhält man 300 Teile eines neutralgelben Pulvers, das im Offsetfirnis und in Kunststoffen gut verteilbar ist.

Beispiel 2

536 Teile eines 37,3 %igen wäßrigen Filterkuchens des Pigments der Formel II werden in 1 300 Teilen Wasser dispergiert. Dann werden 30 Teile Calciumchlorid dazugegeben und die Suspension auf 40 °C erwärmt. Dann tropft man langsam 600 Teile einer natronalkalischen 10 %igen Lösung von Collophonium

zu und hält den pH-Wert durch Zugeben von 30 %iger Salzsäure während dieser Zeit bei 7. Dann wird noch eine Stunde nachgerührt, abgesaugt, mit Wasser gewaschen und bei 80 °C getrocknet. Ausbeute : 265 Teile Zubereitung in Form eines grünstichig-gelben Produktes, das gut verteilbar ist.

Beispiel 3

1 010 Teile eines etwa 20 %igen wäßrigen Filterkuchens des Pigments der Formel III werden in 1 300 Teilen Wasser angerührt und mit 30 Teilen Calciumchlorid versetzt. Nach dem Aufheizen auf 50 °C werden 600 Teile einer 10 %igen alkalischen Harzseifenlösung zugetropft und gleichzeitig mit 25 Teilen einer 10 %igen Natronlauge ein pH-Wert von 7 eingestellt. Man erhält 270 Teile einer rotstichig-gelben Zubereitung.

Beispiel 4

85 Teile des nach Beispiel 2 gewonnenen Pigments und 15 Teile des nach Beispiel 3 erhaltenen Produkts werden gemeinsam gemischt und in einer Mühle gemahlen. Man erhält eine Zubereitung in Form eines gut verteilbaren neutral gelben Pulvers.

Beispiel 5

210 Teile des Monoaddukts von Ethylenglykol an Diiminoisoindolenin werden in eine Lösung von 100 g N-Methylcyanacetamid in 2 000 Teilen Wasser und 200 Teilen konzentrierter Ammoniaklösung gegeben. Nach 2 Stunden wird mit 20 %iger Schwefelsäure ein pH-Wert von 2 eingestellt und mit 130 Teilen Barbitursäure versetzt und die Suspension 2 Stunden bei 80 °C gerührt. Man läßt das Reaktionsgemisch auf 65 °C abkühlen und tropft langsam eine Lösung aus 150 Teilen Collophonium in 1 800 Teilen natronalkalischem Wasser zu, rührt eine weitere Stunde nach, filtriert, wäscht mit Wasser und trocknet bei 60 °C. Man erhält 454 Teile einer in Druckfarben und Kunststoffen gut verteilbaren Zubereitung.

Beispiel 6

200 Teile des Pigments der Formel II und 40 Teile des Pigments der Formel III, jeweils in Form ihrer wäßrigen Preßkuchen, werden in 1 600 Teilen heißem Wasser suspendiert. Unter gutem Rühren läßt man 720 Teile einer 10 %igen Harzseifenlösung langsam zulaufen, wobei durch Zugeben von konzentrierter Salzsäure der pH-Wert dauernd auf etwa 3 gehalten wird. Man rührt noch eine Stunde bei 25 °C und pH 3 nach, filtriert, wäscht und trocknet bei 60 °C. Man erhält 280 Teile Zubereitung in Form eines neutral gelben Produkts.

Beispiel 7

Man verfährt wie im Beispiel 1, jedoch werden anstelle von 36 Teilen nur 20 Teile Calciumchlorid verwendet.

Beispiel 8

Man verfährt wie im Beispiel 1, jedoch wird statt der angegebenen 10 %igen Natriumharzseifenlösung eine alkalische Lösung von 73 Teilen eines hydrierten Collophoniums (ᴿSTABELITE der Fa. Hercules) verwendet.

Beispiel 9

Man arbeitet wie im Beispiel 8, jedoch wird anstelle des hydrierten Harzes die Lösung eines dimerisierten Collophoniums (ᴿDYMEREX der Fa. Hercules) verwendet.

Anwendungsbeispiel 1

Offsetdruckfarbe

10 Teile der Zubereitung aus Beispiel 1 werden in 40 Teilen eines Offsetfirnisses (40 % eines modifizierten Collophoniumharzes, 40 % Mineralöl und 20 % Lackleinöl) mit dem Spatel verrührt und anschließend mit einem Dissolver bei 16 000 U/Min. 10 Minuten bei 70 °C dispergiert. Die erhaltene Farbe wird dann auf einem Dreiwalzwerk bei 15 bar angerieben. Man erhält so eine Offsetdruckfarbe mit ausgezeichneter Feinverteilung.

Verwendet man anstelle der Zubereitung aus Beispiel 1 die Zubereitungen der Beispiele 2 bis 6, dann erhält man ebenfalls Offsetdruckfarben, die das Pigment in ausgezeichneter Feinverteilung enthalten.

Anwendungsbeispiel 2

Weich-PVC ; 1 : 10 (Verschnitt)

0,25 Teile Zubereitung aus Beispiel 1 werden mit 2,5 Teilen Titandioxid (Rutilware) und 50 Teilen einer Mischung aus 65 Teilen Polyvinylchloridpulver, 36 Teilen Di-ethylhexylphthalat und 2 Teilen Dibutyl-Zinn-bis-thioglykolsäurehexylester auf einem Mischwalzwerk bei 150 bis 160 °C homogenisiert (ca. 8 Minuten), zu Fellen gewalzt und auf einem Kalanderwalzwerk geglättet. Man erhält gelbe, farbstarke Felle, die das Pigment in sehr guter Feinverteilung enthalten.

Gleich gute Ergebnisse erhält man mit den Zubereitungen der Beispiele 2 bis 6.

Anwendungsbeispiel 3

Polyethylen 0,05 %ig (transparent)

0,05 Teile Zubereitung aus Beispiel 1 werden in einem Trommelmischer mit 100 Teilen Polyethylenpulver (Hochdruckware) trocken gemischt. Das Gemisch wird auf einer Schneckenpress bei einer Zylindertemperatur von 160 bis 200 °C geschmolzen und homogenisiert. Die gefärbte plastische Masse wird durch Heißabschlagen am Düsenkopf oder durch Ausziehen von Fäden unter Kühlung granuliert. Das so erhaltene Granulat wird anschließend in einer Spritzgußvorrichtung bei 200 °C zu Formkörpern verspritzt oder auf Pressen zu beliebigen Körpern gepreßt. Man erhält gelbe Preßlinge, die eine gute Verteilung des Pigments aufweisen.

Praktisch das gleiche Ergebnis erhält man, wenn man die Zubereitung aus Beispiel 1 durch die Zubereitungen der Beispiele 2 bis 6 ersetzt.

**Patentansprüche**

1. Zubereitungen von leicht verteilbaren Isoindolinpigmenten, enthaltend

a) mindestens ein Isoindolinpigment der Formel I

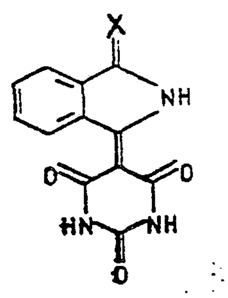

(I)

in der X für

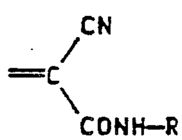

oder

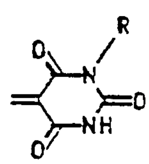

steht
und R Wasserstoff oder $C_1$- bis $C_4$-Alkyl bedeuten, und

b) mindestens 5 Gew.%, bezogen auf (a), mindestens eines Carboxylgruppen tragenden Harzes aus der Reihe der (1) natürlichen oder modifizierten natürlichen (halbsynthetischen) oder (2) synthetischen Harze, deren Salze mit starken Basen in Wasser löslich sind, (3) eines Calcium-, Magnesium-, Strontium- oder Zinksalzes der unter (1) und/oder (2) genannten Harze oder Gemische aus (1), (2) und/oder (3),

wobei die Zubereitungen durch Suspendieren oder gegebenenfalls Dispergieren des Pigments bzw. des Pigmentgemisches in wäßrigem Medium und anschließender Harzung (Belegung) bei pH < 9,5, vorzugsweise < 8 erhältlich sind.

2. Zubereitungen gemäß Anspruch 1, wobei die Zubereitungen dadurch erhalten werden, daß man

zur wäßrigen Suspension des Pigments oder des Pigmentgemisches ein lösliches Calciumsalz gibt und dann durch Zugeben der alkalischen Lösung der Carboxylgruppen tragenden Harze, welche die Harze in Form der Alkalimetallsalze enthält, die Harzung im pH-Bereich von 4 bis 9,5 durchführt.

3. Zubereitungen gemäß Anspruch 1 oder 2, dadurch gekennzeichnet, daß diese als (b) Collophonium, dimerisiertes Collophonium, polymerisiertes Collophonium, disproportioniertes Collophonium, Abietinsäure und deren Hydrierungsprodukte, modifiziertes Collophonium, modifizierte Abietinsäure, Calcium-, Magnesium-, Strontium- oder Zinksalze des Collophoniums, des dimerisierten Collophoniums, des polymerisierten Collophoniums, des disproportionierten Collophoniums, der Abietinsäure, von Hydrierungsprodukten der Abietinsäure, von modifiziertem Collophonium, von modifizierter Abietinsäure oder Gemische davon enthalten.

4. Zubereitungen gemäß Anspruch 1, 2 oder 3, dadurch gekennzeichnet, daß diese 5 bis 60 Gew.% (b), bezogen auf (a), enthalten.

5. Zubereitungen gemäß Anspruch 1, 2 oder 3, dadurch gekennzeichnet, daß diese 20 bis 40 Gew.% (b), bezogen auf (a), enthalten.

6. Zubereitungen gemäß Anspruch 1, 2, 3, 4 oder 5, dadurch gekennzeichnet, daß diese als (b) Collophonium, Abietinsäure, dimerisiertes Collophonium, polymerisiertes Collophonium, diproportioniertes Collophonium, deren Hydrierungsprodukte, modifiziertes Collophonium, modifizierte Abietinsäure und/oder die Calciumsalze dieser Harze enthalten.

7. Zubereitungen gemäß Anspruch 1, 2, 3, 4, 5 oder 6, dadurch gekennzeichnet, daß (a) ein Gemisch der Pigmente der Formel I mit

X = 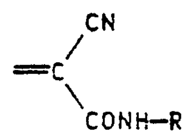 und X = 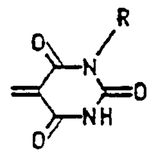

im Verhältnis von 99 : 1 bis 1 : 99 Gewichtsteilen ist.

8. Zubereitungen gemäß Anspruch 7, dadurch gekennzeichnet, daß (a) ein Gemisch von Pigmenten der Formel I mit

X = 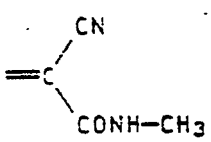 und X = 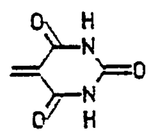

im Verhältnis von 4,5 : 1 bis 5,5 : 1 Gewichtsteilen ist.

9. Verwendung der Zubereitung gemäß den Ansprüchen 1 bis 8 zum Pigmentieren von Druckfarben, Lacken oder Thermoplasten.

**Claims**

1. A formulation of a readily dispersible isoindoline pigment, containing

a) one or more isoindoline pigments of the formula I

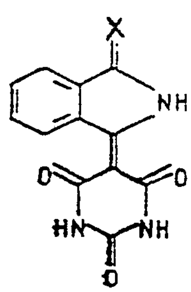 (I)

where X is

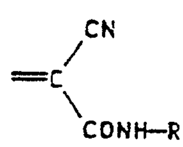 or 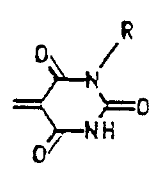

and R is hydrogen or $C_1$-$C_4$-alkyl, and

b) not less than 5 % by weight, based on (a), of one or more carboxyl-containing resins from the series consisting of (1) natural resins and modified natural (semi-synthetic) resins, or (2) synthetic resins whose salts with strong bases are soluble in water, or (3) one or more calcium, magnesium, strontium or zinc salts of the resins specified under (1) and/or (2), or mixtures of the compounds specified under (1), (2) and/or (3),

the formulation being obtainable by suspending or, if desired, dispersing the pigment or pigment mixture in aqueous medium, and subsequent treatment with the resin (coating) at pH < 9.5, preferably < 8.

2. A formulation as claimed in claim 1, which is obtained by adding a soluble calcium salt to the aqueous suspension of the pigment or pigment mixture, and then effecting treatment with the resin at a pH of from 4 to 9.5 by adding an alkaline solution of the carboxyl-containing resin, which solution contains the resin the form of its alkali metal salts.

3. A formulation as claimed in claim 1 or 2, which contains, as (b), colophony, dimerized, polymerized or disproportionated colophony, abietic acid, their hydrogenation products, modified colophony, modified abietic acid or calcium, magnesium, strontium or zinc salts of colophony, of dimerized, polymerized or disproportionated colophony, of abietic acid, of hydrogenation products of abietic acid, of modified colophony or of modified abietic acid, or mixtures of these.

4. A formulation as claimed in claim 1., 2 or 3, which contains from 5 to 60 % by weight, based on (a), of (b).

5. A formulation as claimed in claim 1, 2 or 3, which contains from 20 to 40 % by weight, based on (a), of (b).

6. A formulation as claimed in claim 1, 2, 3, 4 or 5, which contains, as (b), colophony, abietic acid, dimerized, polymerized or disproportionated colophony, their hydrogenation products, modified colophony, modified abietic acid and/or the calcium salts of these resins.

7. A formulation as claimed in claim 1, 2, 3, 4, 5 or 6, wherein (a) is a mixture of a pigment of the formula I, where X is

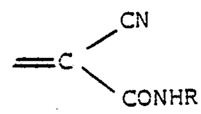 ,

with a pigment of the formula I, where X is

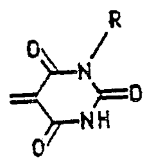

in a weight ratio of from 99 : 1 to 1 : 99.

8. A formulation as claimed in claim 7, wherein (a) is a mixture of a pigment of the formula I, where X is

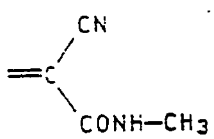

with a pigment of the formula I, where X is

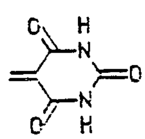

in a weight ratio of from 4.5 : 1 to 5.5 : 1.

9. The use of a formulation as claimed in claims 1 to 8 for pigmenting printing inks, surface coatings and thermoplastics.

**Revendications**

1. Préparations de pigments d'iso-indoline facilement dispersables, contenant

a) au moins un pigment d'iso-indoline de formule I

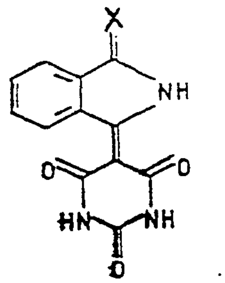

(I)

dans laquelle X est mis pour

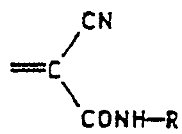

ou

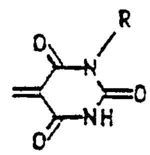

R représentant un atome d'hydrogène ou un radical alkyle en $C_1$ à $C_4$, et

b) au moins 5 % en poids, par rapport à (a), d'au moins une résine portant des groupes carboxyle, de la série : (1) des résines naturelles ou naturelles modifiées (semisynthétiques), (2) des résines synthétiques dont les sels avec des bases fortes sont solubles dans l'eau, (3) d'un sel calcique, magnésien, strontique ou zincique des résines citées en (1) et/ou (2), ou de mélanges de (1), (2) et/ou (3),

les préparations pouvant être obtenues par la mise en suspension ou, le cas échéant, la dispersion du pigment ou du mélange de pigments dans un milieu aqueux, suivie d'un résinage (enduction de résine) à un pH < 9,5, de préférence < 8.

2. Préparations selon la revendication 1, obtenues en ajoutant un sel soluble de calcium à la suspension aqueuse du pigment ou du mélange de pigments, puis en ajoutant la solution alcaline des résines portant des groupes carboxyle, solution qui contient les résines sous la forme des sels de métaux alcalins et en procédant au résinage dans la gamme de pH de 4 à 9,5.

3. Préparations selon la revendication 1 ou 2, caractérisées en ce qu'elles contiennent, en tant que (b), de la colophane, de la colophane dimérisée, de la colophane polymérisée, de la colophane dismutée, de l'acide abiétique et ses produits d'hydrogénation, de la colophane modifiée, de l'acide abiétique modifié, des sels calciques, magnésiens, strontiques ou zinciques de colophane, colophane dimérisée, colophane polymérisée, colophane dismutée, acide abiétique, produits d'hydrogénation de l'acide abiétique, colophane modifiée, ou acide abiétique modifié, ou des mélanges de ceux-ci.

4. Préparations selon l'une quelconque des revendications 1 à 3, caractérisées en ce qu'elles contiennent 5 à 60 % en poids de (b), par rapport à (a).

5. Préparations selon l'une quelconque des revendications 1 à 3, caractérisées en ce qu'elles contiennent 20 à 40 % en poids de (b), par rapport à (a).

6. Préparations selon l'une quelconque des revendications 1 à 5, caractérisées en ce qu'elles contiennent, en tant que (b), de la colophane, de l'acide abiétique, de la colophane dimérisée, de la colophane polymérisée, de la colophane dismutée, leurs produits d'hydrogénation, de la colophane modifiée, de l'acide abiétique modifié et/ou les sels calciques de ces résines.

7. Préparations selon l'une quelconque des revendications 1 à 6, caractérisées en ce que (a) est un mélange, dans un rapport de 99 : 1 à 1 : 99 parties en poids, des pigments de formule I avec

X = 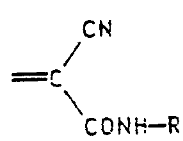

et

X = 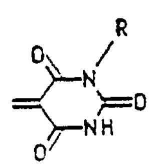

8. Préparations selon la revendication 7, caractérisées en ce que (a) est un mélange, dans un rapport de 4,5 : 1 à 5,5 : 1 parties en poids, de pigments de formule I avec

X = 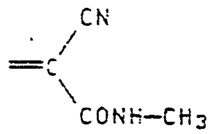 et X = 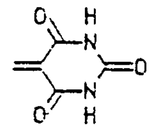

9. Utilisation des préparations selon l'une quelconque des revendications 1 à 8 pour la pigmentation d'encres d'imprimerie, de vernis ou de matières thermoplastiques.